# EUROPÄISCHE PATENTANMELDUNG

(11) **EP 0 586 980 A1**
(43) Veröffentlichungstag der Anmeldung: **16.03.1994**
(21) Anmeldenummer: 93113708.7
(22) Anmeldetag: 27.08.1993
(51) Int. Cl.: B65G 53/56

(54) **Rohrweiche für Anlagen zur pneumatischen Förderung von Schüttgut**

(30) Priorität: 09.09.1992 DE 4230096
(71) Anmelder: BASF Aktiengesellschaft, D-67063 Ludwigshafen (DE)
(72) Erfinder: Ardanuy, Fernando, E-43151 Pallaresos (ES)

(57) **Zusammenfassung**

Die Rohrweiche für Anlagen zur pneumatischen Förderung von Schüttgut besteht aus einem Gehäuse (1) mit einem ersten Anschluß (2), einem damit achsgleich fluchtenden, zweiten Anschluß (3) und einem dritten Anschluß (4), dessen Achse mit derjenigen des zweiten Anschlusses einen Winkel von weniger als 90° einschließt. Symmetrisch zwischen dem zweiten und dritten Anschluß ist ein in Form eines Ventils ausgebildetes Steuerelement (6) in einer zylindrischen Bohrung (5) des Gehäuses (1) drehbar gelagert. Das Steuerelement enthält einen rohrförmigen Durchbruch (9), welcher in einer ersten Drehstellung des Ventilkörpers den ersten Anschluß (2) mit dem zweiten Anschluß (3) und in einer zweiten Drehstellung des Ventilkörpers den ersten Anschluß (2) mit dem dritten Anschluß (4) verbindet.

## Beschreibung

Die Erfindung betrifft eine Rohrweiche der im Oberbegriff des Patentanspruchs 1 angegebenen Gattung.

Eine derartige Rohrweiche ist aus der DE-PS 38 17 349 bekannt. Das Steuerelement besteht aus einem Küken mit zwei parallelen Rohrabschnitten, zwei Ringsegmenten und einem Drehzapfen. In den zwei Endstellungen des Kükens verbindet einmal der eine Rohrabschnitt den ersten Anschluß des Gehäuses mit dessen zweitem Anschluß und einmal der zweite Rohrabschnitt den ersten Anschluß des Gehäuses mit dessen drittem Anschluß. Die Ringsegmente, die sich unter Freilassung eines kleinen Spaltes koaxial zu der Innenwand des Gehäuses erstrecken, dienen dabei zur Fixierung der Enden der Rohrabschnitte und als Dichtflächen im Zusammenwirken mit Elastomerdichtungen im Bereich der jeweiligen Anschlüsse. Ein solches Küken ist jedoch fertigungstechnisch aufwendig und wegen des unvermeidbar in den Spalt zwischen den Ringsegmenten und der Gehäuseinnenwand gelangenden Schüttguts betriebstechnisch ungünstig.

Eine Rohrweiche mit ähnlicher Anordnung der Anschlüsse am Gehäuse und einem Küken ist aus der DE-OS 38 00 942 bekannt. Als Küken ist ein Drehzylinder mit Zylinderwand und schräger Zylinderschnittfläche vorgesehen, wobei die Zylinderwand in der ersten Stellung des Kükens den dritten Anschluß und in der zweiten Stellung des Kükens den zweiten Anschluß abdeckt. Die Zylinderschnittfläche wirkt als Prallplatte. Die damit erzwungene Umlenkung des Schüttgutstromes verursacht indes einen unerwünscht hohen Druckverlust.

Mit der Erfindung soll eine Rohrweiche der einleitend angegebenen Gattung geschaffen werden, deren Steuerelement eine besonders einfache und strömungstechnisch günstige Form aufweist.

Zur Lösung dieser Aufgabe werden die Maßnahmen nach dem Kennzeichen des Patentanspruchs 1 vorgeschlagen.

Erfindungsgemäß ist das Steuerelement auf zwei für die Funktion der Rohrweiche erforderliche Teile reduziert, nämlich den als zylindrisches Drehteil ausgebildeten Ventilkörper mit einem rohrförmigen Durchbruch, der sich zwischen seinem Boden und seiner Mantelfläche erstreckt, und den mit dem Ventilkörper verbundenen Drehzapfen. Der Ventilkörper ist mit einem Spiel in das Gehäuse eingepaßt, dessen Größe von der Betriebstemperatur und dem Druck der Förderluft abhängt. Sein Durchmesser kann in weiten Grenzen variieren und hängt im wesentlichen von dem Nenndurchmesser der Förderleistung bzw. der Anschlüsse ab. Durch die Führungen an den Enden des Ventilkörpers bzw. durch den Ventilsitz läßt sich eine besonders hohe Drehgeschwindigkeit erreichen. Die Umlenkung des Schüttgutstromes kann ohne Betriebsunterbrechung sowohl bei langsamer als auch bei schneller pneumatischer Förderung erfolgen. Sie ist manuell, elektromotorisch oder elektropneumatisch über den Drehzapfen betätigbar, wobei während des Umlenkens auch Produkt im Innern des Ventilkörpers bzw. der Weiche vorhanden sein kann. Die Rohrweiche kann zudem in jeder Stellung, d.h. auch senkrecht steigend eingebaut werden.

Zweckmäßige Weiterbildungen der Rohrweiche nach der Erfindung sind Gegenstand der Unteransprüche 2 und 3.

Die Erfindung wird nachfolgend unter Hinweis auf die Zeichnungen anhand eines Ausführungsbeispieles näher erläutert.

Es zeigt
- Figur 1: einen Längsschnitt durch die Rohrweiche mit in seiner ersten Stellung befindlichem Steuerelement,
- Figur 2: den gleichen Schnitt mit in seiner zweiten Stellung befindlichem Steuerelement und
- Figur 3: eine Schnittdarstellung mit dem Steuerelement in einer Zwischenstellung.

Im wesentlichen umfaßt die Rohrweiche ein Gehäuse (1) aus Stahlguß, Kohlenstoffstahl, Aluminium oder Bronze mit einem ersten Anschluß (2), einem damit achsgleich fluchtenden zweiten Anschluß (3) und einem dritten Anschluß (4), dessen Achse unter einem Winkel von weniger als 90° zu der gemeinsamen Achse des ersten und des zweiten Anschlusses verläuft. Alle Anschlüsse haben Kreisquerschnitt und gleich großen Innendurchmesser. Symmetrisch zwischen dem zweiten und dritten Anschluß ist in einer zylindrischen Bohrung (5) des Gehäuses (1) ein Steuerelement (6) vorgesehen. Es besteht aus einem zylindrischen Ventilkörper (7), der in der Bohrung (5) drehbar gelagert ist und einem mit dem Ventilkörper form- und kraftschlüssig verbundenen Drehzapfen (8). Mit (9) ist ein rohrförmiger Durchbruch in dem Ventilkörper bezeichnet, der querschnittsgleich zu den Anschlüssen (2,3,4) ist und unter einem Winkel entsprechend dem zwischen der Längsachse des Steuerelements und der Achse des ersten und zweiten Anschlusses (2,3) verläuft. Der Durchbruch erstreckt sich zwischen dem Boden und der Mantelfläche des Ventilkörpers (7).

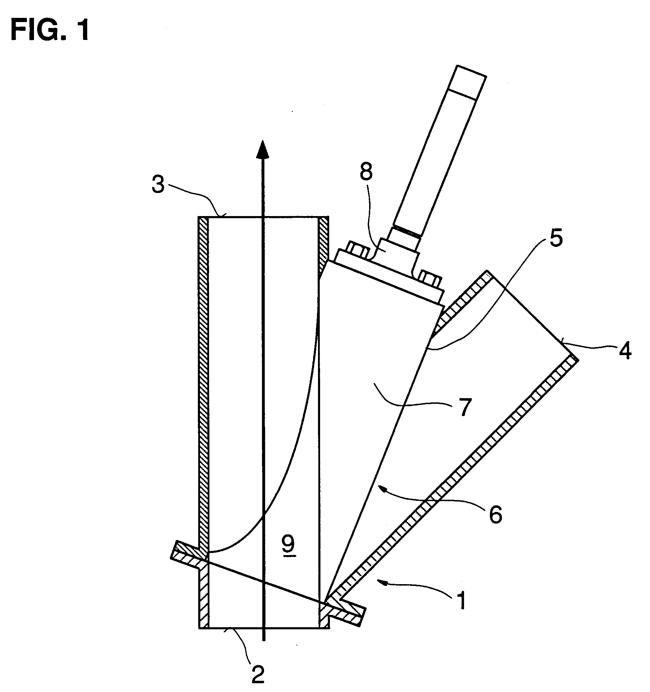

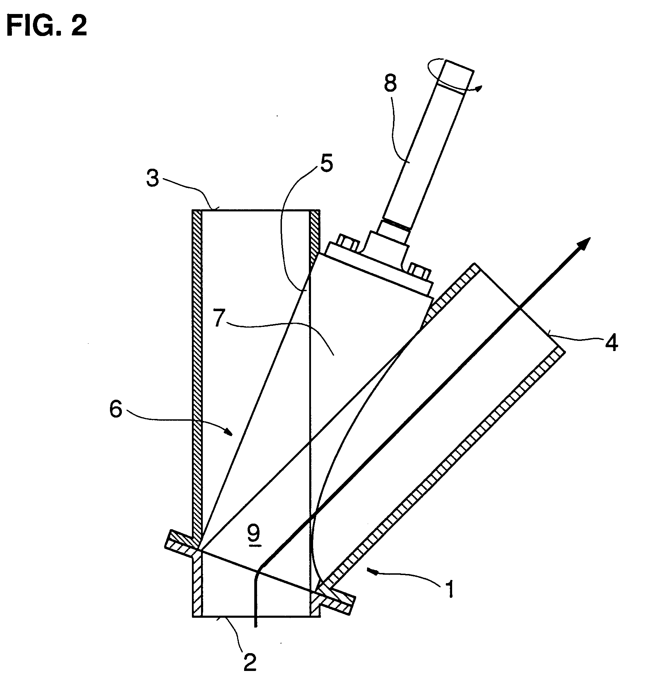

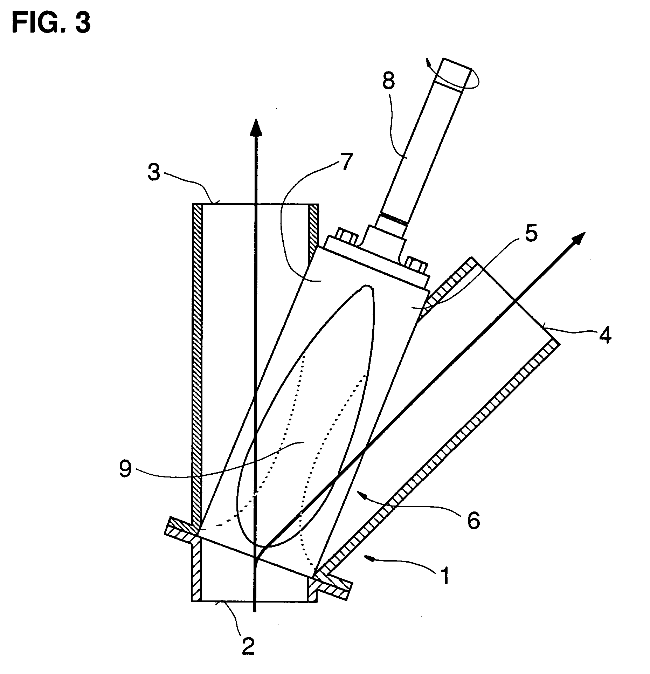

Beim Betrachten der Figuren 1 und 2 wird deutlich, daß sich das Steuerelement (6) aus einer ersten Stellung, in der sein rohrförmiger Durchgang (9) die Anschlüsse (2) und (3) miteinander verbindet, durch Drehung in eine zweite Stellung bringen läßt, in der der zweite Anschluß (3) des Gehäuses (1) durch den Ventilkörper (7) abgedeckt ist, während der erste Anschluß (2) mit dem dritten Anschluß (4) verbunden ist. Gemäß Figur 3 kann das Steuerelement (6) auch eine Zwischenstellung einnehmen und dabei den Anschluß (2) mit den Anschlüssen (3) und (4) verbinden, wenn beispielsweise Schüttgut von einem Aufgabeort zu zwei Empfangsorten geleitet werden soll oder umgekehrt.

## Patentansprüche

1. Rohrweiche für Anlagen zur pneumatischen Förderung von Schüttgut, bestehend aus einem Gehäuse mit einem ersten Anschluß, einem damit achsgleich fluchtenden, zweiten Anschluß, einem dritten Anschluß, dessen Achse mit derjenigen des zweiten Anschlusses einen Winkel von weniger als 90° einschließt, und mit einem dazwischenliegenden, in einer zylindrischen Bohrung des Gehäuses drehbaren Steuerelement, welches in einer ersten Drehstellung den ersten Anschluß mit dem zweiten Anschluß und in einer zweiten Drehstellung den ersten Anschluß mit dem dritten Anschluß verbindet, dadurch gekennzeichnet, daß das Steuerelement (6) in Form eines Ventils ausgebildet und symmetrisch zwischen dem zweiten (3) und dritten (4) Anschluß angeordnet ist und einen rohrförmigen Durchbruch (9) enthält, der sich zwischen dem Boden und der Mantelfläche des Ventilkörpers (7) erstreckt.

2. Rohrweiche nach Anspruch 1, dadurch gekennzeichnet, daß die Anschlüsse (2,3,4) einen gleich großen Innendurchmesser aufweisen wie der Innendurchmesser des rohrförmigen Durchbruchs (9) in dem Ventilkörper (7).

3. Rohrweiche nach den Ansprüchen 1 und 2, dadurch gekennzeichnet, daß der rohrförmige Durchbruch (9) in einer Zwischenstellung des Steuerelements (6) den ersten Anschluß (2) sowohl mit dem zweiten Anschluß (3) als auch mit dem dritten Anschluß (4) verbindet.
